(19) Europäisches Patentamt European Patent Office Office européen des brevets

(11) **EP 3 719 286 A1**

(12) **EUROPEAN PATENT APPLICATION**
published in accordance with Art. 153(4) EPC

(43) Date of publication:
**07.10.2020 Bulletin 2020/41**

(51) Int Cl.:
*F02D 15/02* (2006.01) *F01B 31/14* (2006.01)
*F02B 75/04* (2006.01) *F02B 75/32* (2006.01)
*F16C 7/06* (2006.01)

(21) Application number: **18882828.9**

(22) Date of filing: **30.11.2018**

(86) International application number:
**PCT/JP2018/044210**

(87) International publication number:
**WO 2019/107549 (06.06.2019 Gazette 2019/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2017 JP 2017230697**

(71) Applicant: **IHI Corporation**
**Tokyo 135-8710 (JP)**

(72) Inventors:
• **MASUDA Yutaka**
**Tokyo 135-8710 (JP)**
• **HIROSE Takayuki**
**Tokyo 135-8710 (JP)**
• **YAMADA Takayuki**
**Tokyo 135-8710 (JP)**
• **NAKAJIMA Hayato**
**Tokyo 135-8710 (JP)**

(74) Representative: **TBK**
**Bavariaring 4-6**
**80336 München (DE)**

(54) **ENGINE SYSTEM AND VARIABLE COMPRESSION DEVICE CONTROL METHOD**

(57) The engine system (100) includes: a variable compression device (A) including a hydraulic chamber (R3) that causes a piston rod (6) connected to a piston (4) to be moved in a direction in which a compression ratio is increased by a pressurized working fluid being supplied thereto; a pressure-increasing mechanism (8) that pressurizes the working fluid and supplies the pressurized working fluid to the hydraulic chamber; a detection device (3d, 400, 500) that outputs a signal including positional information of the piston rod; and a control device (300) configured to control the pressure-increasing mechanism so as to hold a movement position of the piston rod based on the positional information.

FIG. 1

## Description

Technical Field

The present disclosure relates to an engine system and a method of controlling a variable compression device.

Priority is claimed on Japanese Patent Application No. 2017-230697 filed on November 30, 2017, the content of which is incorporated herein by reference.

Background Art

For example, Patent Document 1 discloses a large reciprocating piston combustion engine including a crosshead. The large reciprocating piston combustion engine of Patent Document 1 is a dual fuel engine that can be operated using both a liquid fuel such as heavy oil and a gas fuel such as natural gas. In order for the large reciprocating piston combustion engine of Patent Document 1 to adapt to both a compression ratio suitable for operation using a liquid fuel and a compression ratio suitable for operation using a gas fuel, an adjustment mechanism that changes the compression ratio by moving a piston rod relative to the crosshead due to a hydraulic pressure is provided in a crosshead portion.

Document of Related Art

Patent Document

[Patent Document 1] Japanese Unexamined Patent Application, First Publication No. 2014-20375

Summary of Invention

Technical Problem

In an engine system including a compression adjustment device that changes the compression ratio as described above, the position in a moving direction of the piston rod (the relative positon with respect to the crosshead) is changed, thereby changing the positions of the bottom dead center and the top dead center of a piston and adjusting the compression ratio. Such adjustment for the compression ratio is performed by a control device of the engine system based on operations or the like of an operator. However, even when a change in volume of a working fluid in a fluid chamber for moving the piston rod occurs due to leakage of the working fluid from the fluid chamber or the like, the control device does not obtain an actual compression ratio, and it may be difficult to control the working fluid to maintain the compression ratio. Therefore, in the variable compression device, the compression ratio may be unintentionally changed.

The present disclosure is made in consideration of the above-described circumstances, and an object thereof is to maintain a set compression ratio in an engine system including a variable compression device.

Solution to Problem

In order to solve the above-described problems, an engine system of a first aspect of the present disclosure includes: a variable compression device including a hydraulic chamber that causes a piston rod connected to a piston to be moved in a direction in which a compression ratio is increased by a pressurized working fluid being supplied thereto; a pressure-increasing mechanism that pressurizes the working fluid and supplies the pressurized working fluid to the hydraulic chamber; a detection device that outputs a signal including positional information of the piston rod; and a control device configured to control the pressure-increasing mechanism so as to hold a movement position of the piston rod based on the positional information.

A second aspect of the present disclosure is that in the first aspect, the detection device is provided in a cylinder liner in which the piston is accommodated and is configured to output a signal including positional information of the piston.

A third aspect of the present disclosure is that in the first aspect, the detection device includes a sensor unit that detects movement of a detection target fixed to the piston rod in a non-contact manner.

A fourth aspect of the present disclosure is that in any one of the first to third aspects, the pressure-increasing mechanism includes a discharge valve provided in a flow path that provides communication between the hydraulic chamber and the outside thereof, and the control device is configured to control the pressure-increasing mechanism and the discharge valve such that while the working fluid is supplied to the hydraulic chamber, the working fluid is discharged from the hydraulic chamber.

A fifth aspect of the present disclosure is a method of controlling a variable compression device including a hydraulic chamber that causes a piston rod connected to a piston to be moved in a direction in which a compression ratio is increased by a pressurized working fluid being supplied thereto, the method including: controlling a pressure-increasing mechanism, which is configured to pressurize the working fluid and supply the pressurized working fluid to the hydraulic chamber or to discharge the working fluid from the hydraulic chamber, so as to hold a movement position of the piston rod based on positional information of the piston rod.

Effects of Invention

According to the present disclosure, since the control device acquires a position of the piston rod, even when the position of the piston rod is unintentionally changed due to leakage of the working fluid from the hydraulic chamber or the like, the control device can control the pressure-increasing mechanism such that the piston rod is at a set position and supply the working fluid to the fluid chamber. Thereby, it is possible to prevent an unintended change in compression ratio.

Brief Description of Drawings

FIG. 1 is a cross-sectional view of an engine system of a first embodiment of the present disclosure.
FIG. 2 is a schematic cross-sectional view showing a portion of the engine system of the first embodiment of the present disclosure.
FIG. 3 is a functional block diagram of a control unit of the engine system of the first embodiment of the present disclosure.
FIG. 4 is a flowchart showing an operation of the control unit of the first embodiment of the present disclosure.
FIG. 5 is a perspective view showing a position detection unit of an engine system of a second embodiment of the present disclosure.
FIG. 6 is a cross-sectional view showing a position detection unit of an engine system in a third embodiment of the present disclosure.

Description of Embodiments

Hereinafter, an embodiment of an engine system 100 of the present disclosure will be described with reference to the drawings.

(First Embodiment)

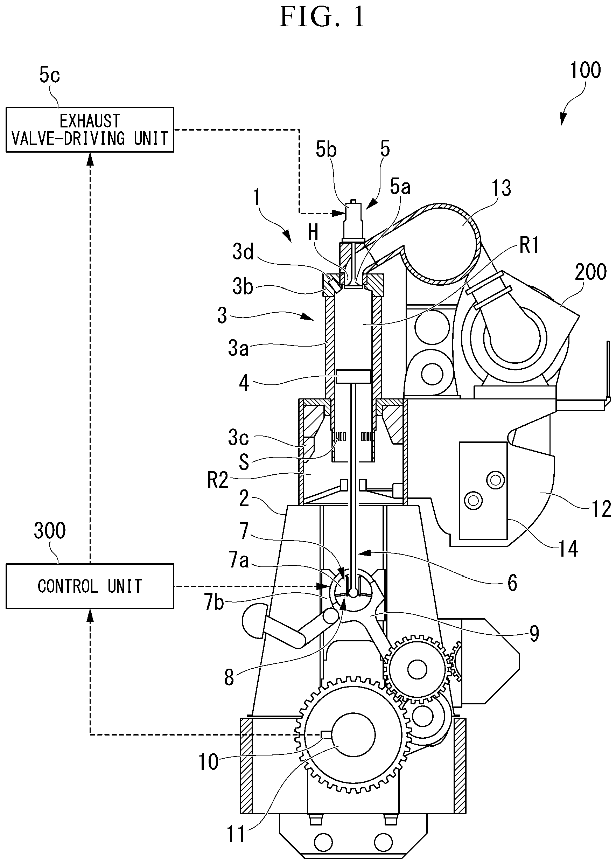

An engine system 100 of this embodiment is mounted on a ship such as a large tanker and includes an engine 1, a turbocharger 200 and a control unit 300 (control device) as shown in FIG. 1. Note that in this embodiment, the turbocharger 200 is regarded as an auxiliary machine and will be described as a separate body from the engine 1 (main machine). However, the turbocharger 200 may be configured as a portion of the engine 1. In addition, the turbocharger 200 is not an essential component for the engine system 100 of this embodiment and may not be provided in the engine system 100.

FIG. 1 is a longitudinal cross-sectional view along a central axis of a cylindrical cylinder liner 3a to be described later provided in the engine system 100. In FIG. 1, a side on which an exhaust valve unit 5 to be described later is provided may be referred to as an upper side, and a side on which a crankshaft 11 to be described later is provided may be referred to as a lower side. A direction intersecting the central axis of the cylinder liner 3a may be referred to as a radial direction. A diagram seen in a direction of the central axis of the cylinder liner 3a may be referred to as a plan view.

The engine 1 is a multi-cylinder uniflow scavenging diesel engine and is a duel fuel engine that can carry out a gas operation mode in which a gas fuel such as natural gas is burned together with a liquid fuel such as heavy oil and a diesel operation mode in which a liquid fuel such as heavy oil is burned. Note that in the gas operation mode, only a gas fuel may be burned. The engine 1 includes a frame 2, a cylinder unit 3, a piston 4, the exhaust valve unit 5, a piston rod 6, a crosshead 7, a hydraulic portion 8 (pressure-increasing mechanism), a connecting rod 9, a crank angle sensor 10, the crankshaft 11, a scavenging reservoir 12, an exhaust reservoir 13 and an air cooler 14. In addition, a cylinder is configured of the cylinder unit 3, the piston 4, the exhaust valve unit 5 and the piston rod 6.

The frame 2 is a rigid member that supports the entire engine 1 and accommodates the crosshead 7, the hydraulic portion 8 and the connecting rod 9. In addition, the frame 2 is configured such that a crosshead pin 7a to be described later of the crosshead 7 can reciprocate inside the frame 2.

The cylinder unit 3 includes the cylindrical cylinder liner 3a, a cylinder head 3b and a cylinder jacket 3c. The cylinder liner 3a is a cylindrical member, and a sliding surface with the piston 4 is formed on an inner side (inner circumferential surface) of the cylinder liner 3a. The space surrounded by the inner circumferential surface of the cylinder liner 3a and the piston 4 is a combustion chamber R1. In addition, a plurality of scavenging ports S are provided in a lower portion of the cylinder liner 3a. The scavenging ports S are openings that are arranged along the circumferential surface of the cylinder liner 3a and provide communication between a scavenging chamber R2 inside the cylinder jacket 3c and the inside of the cylinder liner 3a. The cylinder head 3b is a lid member that is provided in an upper end portion of the cylinder liner 3a. An exhaust port H is provided in a central portion of the cylinder head 3b in a plan view and is connected to the exhaust reservoir 13. In addition, the cylinder head 3b is provided with a cylinder internal pressure sensor 3d (detection device). The cylinder internal pressure sensor 3d detects a pressure inside the combustion chamber R1 and transmits the detected pressure value to the control unit 300. Note that the cylinder internal pressure sensor 3d may be provided in the cylinder liner 3a or the like as long as the pressure in the combustion chamber R1 can be detected. A fuel injection valve (not shown) is provided in the vicinity of the cylinder internal pressure sensor 3d of the cylinder head 3b. The cylinder jacket 3c is a cylindrical member that is provided between the frame 2 and the cylinder liner 3a and into which a lower end portion of the cylinder liner 3a is inserted, and the scavenging chamber R2 is formed inside the cylinder jacket 3c. In addition, the scavenging chamber R2 of the cylinder jacket 3c is connected to the scavenging reservoir 12.

The piston 4 has a substantially columnar shape, is connected to the piston rod 6 to be described later and is disposed inside the cylinder liner 3a. In addition, piston rings (not shown) are provided on the outer circumferential surface of the piston 4 to seal a gap between the piston 4 and the cylinder liner 3a. The piston 4 slides inside the cylinder liner 3a together with the piston rod 6 due to a change in pressure in the combustion chamber R1.

The exhaust valve unit 5 includes an exhaust valve 5a, an exhaust valve cage 5b and an exhaust valve-driving unit 5c. The exhaust valve 5a is provided inside the cylinder head 3b and closes the exhaust port H in the cylinder unit 3 by the exhaust valve-driving unit 5c. The exhaust valve cage 5b is a cylindrical housing that accommodates an end portion of the exhaust valve 5a. The exhaust valve-driving unit 5c is an actuator that moves the exhaust valve 5a in a direction parallel with a stroke direction of the piston 4.

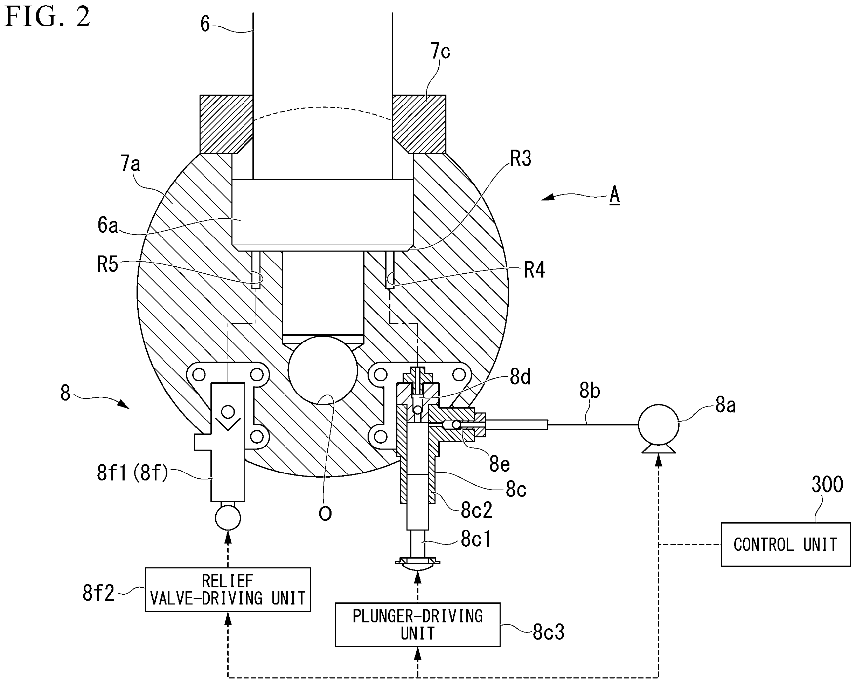

The piston rod 6 is an elongate member having one end (upper end) connected to the piston 4 and the other end (lower end) coupled to the crosshead pin 7a. The end portion (lower end portion) of the piston rod 6 is inserted into the crosshead pin 7a, and the connecting rod 9 is rotatably coupled to the end portion of the piston rod 6. A large diameter portion 6a protruding outward in the radial direction is provided in the outer circumferential surface of part of the end portion (lower end portion) of the piston rod 6, the end portion being close to the crosshead pin 7a (refer to FIG. 2). That is, the outer diameter of the large diameter portion 6a is greater than that of the piston rod 6.

The crosshead 7 includes the crosshead pin 7a, a guide shoe 7b and a lid member 7c. The crosshead pin 7a is a columnar member that movably connects the piston rod 6 and the connecting rod 9 to each other, and a hydraulic chamber R3 (a fluid chamber) to and from which hydraulic oil (working fluid) is supplied and discharged is provided in an insertion space of the crosshead pin 7a into which the end portion (lower end portion) of the piston rod 6 is inserted. The central axis of the crosshead pin 7a extends in a direction orthogonal to the up-down direction. An upper portion of the crosshead pin 7a is provided with an insertion recessed portion that opens upward and into which the large diameter portion 6a is inserted so as to be slidable in the up-down direction. The above hydraulic chamber R3 is provided between a bottom surface of the insertion recessed portion and the lower surface of the large diameter portion 6a. A portion lower than the center of the crosshead pin 7a is provided with an outlet hole O penetrating the crosshead pin 7a in an axial direction of the crosshead pin 7a. The outlet hole O is an opening from which cooling oil having passed through a cooling flow path (not shown) of the piston rod 6 is discharged. In addition, the crosshead pin 7a is provided with a supply flow path R4 connecting the hydraulic chamber R3 and a plunger pump 8c to be described later to each other, and a relief flow path R5 (flow path) connecting the hydraulic chamber R3 and a relief valve 8f (discharge valve) to be described later to each other. In other words, the relief flow path R5 is a flow path that provides communication between the hydraulic chamber R3 and the outside thereof and is provided with the relief valve 8f.

The guide shoe 7b is a member that rotatably supports the crosshead pin 7a and moves together with the crosshead pin 7a on a guide rail (not shown) in the stroke direction of the piston 4. The guide shoe 7b moves along the guide rail, so that movement of the crosshead pin 7a in a direction other than a linear direction parallel with the stroke direction of the piston 4 is regulated. The rotary motion of the crosshead pin 7a around the central axis thereof is also regulated. The lid member 7c is an annular member that is fixed to the upper portion of the crosshead pin 7a and into which the end portion of the piston rod 6 is inserted. The lid member 7c is provided at an opening peripheral edge of the insertion recessed portion of the crosshead pin 7a. The inner diameter of the lid member 7c is equal to the outer diameter of the piston rod 6 and is less than the outer diameter of the large diameter portion 6a. The crosshead 7 transmits the linear motion of the piston 4 to the connecting rod 9.

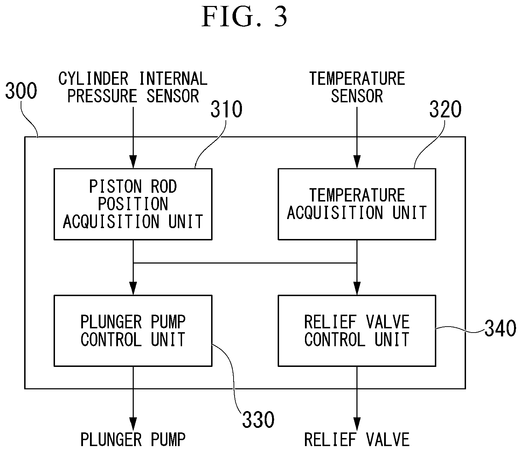

As shown in FIG. 3, the hydraulic portion 8 includes a supply pump 8a, a swing pipe 8b, the plunger pump 8c, a first check valve 8d and a second check valve 8e connected to the plunger pump 8c, and the relief valve 8f. In addition, the piston rod 6, the crosshead 7, the hydraulic portion 8, the control unit 300 and the cylinder internal pressure sensor 3d may function as a variable compression device A of the present disclosure. The variable compression device A may include the piston rod 6, the crosshead 7, the hydraulic portion 8 and the cylinder internal pressure sensor 3d.

The supply pump 8a is a pump that pressurizes hydraulic oil supplied from a hydraulic oil tank (not shown) and supplies the pressurized hydraulic oil to the plunger pump 8c based on instructions given from the control unit 300. The supply pump 8a is driven by electric power of a battery of the ship and can operate before a liquid fuel is supplied to the combustion chamber R1. The swing pipe 8b is a pipe that connects the supply pump 8a and the plunger pump 8c of each cylinder to each other and is swingable between the plunger pump 8c moving in association with the crosshead pin 7a and the fixed supply pump 8a.

The plunger pump 8c is fixed to the crosshead pin 7a and includes a rod-shaped plunger 8c1, a tubular cylinder 8c2 that slidably accommodates the plunger 8c1, and a plunger-driving unit 8c3. The plunger pump 8c slides inside the cylinder 8c2 by the plunger 8c1 being connected to a driving unit (not shown) to pressurize hydraulic oil and to supply the pressurized hydraulic oil to the hydraulic chamber R3. In addition, the first check valve 8d is provided at an opening of an end portion of the cylinder 8c2, from which hydraulic oil is discharged, and the second check valve 8e is provided at an opening provided on a side circumferential surface of the cylinder 8c2, to which hydraulic oil is sucked. The plunger-driving unit 8c3 is connected to the plunger 8c1 and makes the plunger 8c 1 reciprocate based on instructions given from the control unit 300.

The first check valve 8d is configured to be closed by a valve body thereof being pushed inward of the cylinder 8c2 by a pushing member (not shown) and prevents hydraulic oil supplied to the hydraulic chamber R3 from reverse flowing to the cylinder 8c2. In addition, when the pressure of the hydraulic oil in the cylinder 8c2 becomes equal to or higher than the pushing force (valve-opening pressure) of the pushing member of the first check valve 8d, the first check valve 8d is opened by the valve body thereof being pushed by the hydraulic oil. The second check valve 8e is pushed outward of the cylinder 8c2 by a pushing member (not shown) and prevents hydraulic oil supplied to the cylinder 8c2 from reverse flowing to the supply pump 8a. In addition, when the pressure of the hydraulic oil supplied from the supply pump 8a becomes equal to or higher than the pushing force (valve-opening pressure) of the pushing member of the second check valve 8e, the second check valve 8e is opened by a valve body thereof being pushed by the hydraulic oil. Further, the valve-opening pressure of the first check valve 8d is higher than the valve-opening pressure of the second check valve 8e, and the first check valve 8d is not opened due to the pressure of hydraulic oil supplied from the supply pump 8a during a normal operation in which the operation is performed at a predetermined compression ratio.

The relief valve 8f is provided in the crosshead pin 7a and includes a main body 8f1 and a relief valve-driving unit 8f2. The main body 8f1 is a valve connected to the hydraulic chamber R3 and the hydraulic oil tank (not shown). The relief valve-driving unit 8f2 is connected to a valve body of the main body 8f1 and opens and closes the main body 8f1 based on instructions given from the control unit 300. The relief valve 8f is opened by the relief valve-driving unit 8f2, so that hydraulic oil stored in the hydraulic chamber R3 is returned to the hydraulic oil tank.

As shown in FIG. 1, the connecting rod 9 is an elongate member, which is coupled to the crosshead pin 7a and is coupled to the crankshaft 11. The connecting rod 9 converts the linear motion of the piston 4 transmitted to the crosshead pin 7a into rotary motion. The crank angle sensor 10 is a sensor for measuring a crank angle of the crankshaft 11 and transmits a crank pulse signal for calculating the crank angle to the control unit 300.

The crankshaft 11 is an elongate member that is connected to the connecting rod 9 provided in the cylinder, and is rotated by rotary motion transmitted from each connecting rod 9 to transmit motive power to, for example, a screw or the like. The scavenging reservoir 12 is provided between the cylinder jacket 3c and the turbocharger 200, and air pressurized by the turbocharger 200 flows into the scavenging reservoir 12. In addition, the air cooler 14 is provided inside the scavenging reservoir 12. The exhaust reservoir 13 is a pipe-shaped member, which is connected to the exhaust port H of each cylinder and is connected to the turbocharger 200. Gas discharged from the exhaust port H is temporarily stored in the exhaust reservoir 13 to limit pulsation and is then supplied to the turbocharger 200. The air cooler 14 is a device that cools air inside the scavenging reservoir 12.

The turbocharger 200 is a device that pressurizes air sucked from an intake port (not shown) by a turbine that is rotated by gas discharged from the exhaust port H, and supplies the pressurized air to the combustion chamber R1.

The control unit 300 is a computer that controls the amount of fuel to be supplied, and the like based on operations performed by an operator of a ship, or the like. In addition, the control unit 300 changes the compression ratio in the combustion chamber R1 by controlling the hydraulic portion 8. Specifically, the control unit 300 acquires positional information of the piston rod 6 based on a signal from the cylinder internal pressure sensor 3d, controls the plunger pump 8c, the supply pump 8a and the relief valve 8f to adjust the amount of hydraulic oil in the hydraulic chamber R3, thereby changing the position of the piston rod 6 (the relative position of the piston rod 6 with respect to the crosshead pin 7a or the relative position of the piston rod 6 with respect to the hydraulic chamber R3) and changing the compression ratio. As shown in FIG. 3, the control unit 300 includes a piston rod position acquisition unit 310, a temperature acquisition unit 320, a plunger pump control unit 330 and a relief valve control unit 340. For example, the control unit 300 may be physically configured as a computer that includes hardware, for example, one or more processors, a main storage device such as random access memory (RAM) and read only memory (ROM), an auxiliary storage device such as a hard disk device, an input device such as an operation panel, an output device such as a display, and a communication module serving as a data transmission/reception device. For example, hardware of the main storage device reads one or more predetermined computer programs based on a signal from a temperature sensor (not shown), each hardware is operated under control of the one or more processors, and reading and writing of data are performed in the main storage device and the auxiliary storage device, whereby functions of the piston rod position acquisition unit 310, the temperature acquisition unit 320, the plunger pump control unit 330 and the relief valve control unit 340 are realized.

The piston rod position acquisition unit 310 calculates a position of the piston rod 6 in a sliding direction of the piston 4 (height direction, up-down direction) based on an input from the cylinder internal pressure sensor 3d (detection device) that detects the pressure in the combustion chamber R1. Then, the piston rod position acquisition unit 310 compares a position of the piston rod 6 based on a set compression ratio with the actual position of the piston rod 6. The temperature acquisition unit 320 acquires a temperature of the hydraulic oil based on a signal from a temperature sensor (not shown) that measures a temperature of the hydraulic oil in the hydraulic chamber R3. Then, the temperature acquisition unit 320 compares a predetermined threshold value with the actual temperature of the hydraulic oil. The plunger pump control unit 330 calculates a drive time and a discharge amount of the plunger pump 8c based on the positional information of the piston rod 6 and the temperature information of the hydraulic oil, and controls the plunger pump 8c. The relief valve control unit 340 calculates a valve-opening time of the relief valve 8f based on the positional information of the piston rod 6 and the temperature information of the hydraulic oil, and controls the relief valve 8f. Note that the cylinder internal pressure sensor 3d of this embodiment can output a signal including positional information of the piston rod 6. That is, in this embodiment, the "signal including positional information of the piston rod 6" is not only a signal indicating a relative position of the piston rod 6 with respect to the crosshead pin 7a or the hydraulic chamber R3, but may also be a signal used for calculating a position of the piston rod 6, for example, may be a signal indicating the pressure in the combustion chamber R1.

The engine system 100 is a device that makes the piston 4 slide inside the cylinder liner 3a to rotate the crankshaft 11 by igniting and exploding fuel injected into the combustion chamber R1 from the fuel injection valve (not shown). In detail, the fuel supplied to the combustion chamber R1 is mixed with air flowing in from the scavenging ports S and is then compressed due to the piston 4 moving in a direction toward the top dead center, thereby increasing the temperature thereof and causing spontaneous ignition. Further, in the case of using a liquid fuel, the liquid fuel is vaporized due to an increase in temperature in the combustion chamber R1, thereby causing spontaneous ignition.

Then, the fuel in the combustion chamber R1 rapidly expands due to its spontaneous ignition, and a pressure is applied to the piston 4 in a direction toward the bottom dead center. Thereby, the piston 4 moves in the direction toward the bottom dead center, the piston rod 6 moves together with the piston 4, and the crankshaft 11 is rotated through the connecting rod 9. Further, the piston 4 is moved to the bottom dead center, so that pressurized air flows into the combustion chamber R1 from the scavenging ports S. The exhaust port H is opened by the exhaust valve unit 5 driving it, and exhaust gas in the combustion chamber R1 is pushed out to the exhaust reservoir 13 by the pressurized air.

In a case where the compression ratio is increased, the control unit 300 drives the supply pump 8a to supply hydraulic oil to the plunger pump 8c. Then, the control unit 300 drives the plunger pump 8c to pressurize hydraulic oil up to a pressure capable of lifting the piston rod 6, and supplies the pressurized hydraulic oil to the hydraulic chamber R3. The end portion of the piston rod 6 is lifted by the pressure of the hydraulic oil in the hydraulic chamber R3, and accordingly, the position of the top dead center of the piston 4 is changed upward (toward the exhaust port H).

In a case where the compression ratio is decreased, the control unit 300 drives the relief valve 8f to provide communication between the hydraulic chamber R3 and the hydraulic oil tank (not shown). Then, the weight of the piston rod 6 is applied to the hydraulic oil in the hydraulic chamber R3, and the hydraulic oil in the hydraulic chamber R3 is pushed out to the hydraulic oil tank through the relief valve 8f. Thereby, the hydraulic oil in the hydraulic chamber R3 is reduced, the piston rod 6 is moved downward (toward the crankshaft 11), and accordingly, the position of the top dead center of the piston 4 is changed downward.

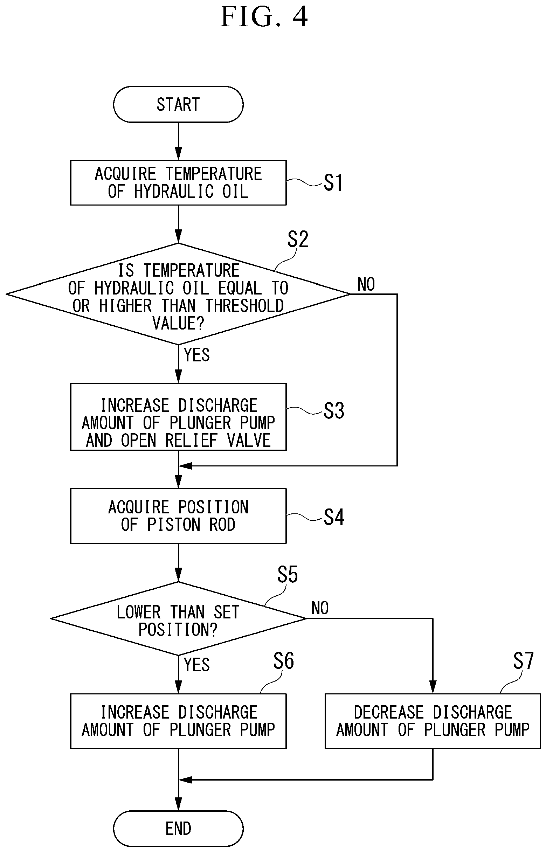

Next, a method of adjusting the position of the piston rod 6 of this embodiment will be described (refer to FIG. 4).

First, the control unit 300 calculates a temperature of the hydraulic oil based on an input from the temperature sensor using the temperature acquisition unit 320 (step S1). Then, the control unit 300 determines whether or not the calculated temperature of the hydraulic oil is equal to or higher than a threshold value using the temperature acquisition unit 320 (step S2). When the temperature acquisition unit 320 determines that the temperature of the hydraulic oil is equal to or higher than the threshold value, that is, when the determination in step S2 is YES, the control unit 300 calculates respective drive times of the plunger pump 8c and the relief valve 8f using the plunger pump control unit 330 and the relief valve control unit 340, and drives the plunger pump 8c and the relief valve 8f (step S3). Thereby, the hydraulic oil inside the hydraulic chamber R3 is discharged and new hydraulic oil is supplied thereto so that the temperature of the hydraulic oil inside the hydraulic chamber R3 decreases.

Also, when the temperature acquisition unit 320 determines that the temperature of the hydraulic oil is lower than the threshold value, that is, when the determination in step S2 is NO, the processing of the control unit 300 proceeds to step S4. Then, the control unit 300 calculates a position in the height direction of the piston rod 6 based on an input from the cylinder internal pressure sensor 3d using the piston rod position acquisition unit 310 (step S4).

Specifically, the position in the height direction of the piston rod 6 is calculated through the following procedures.

In a case where the cylinder internal pressure when the piston 4 is positioned at the bottom dead center is represented by $P_0$ and the cylinder internal pressure when the piston 4 is positioned at the top dead center is represented by $P_1$, a compression ratio $\varepsilon$ is expressed by the following Expression (1). Note that $\kappa$ represents a polytropic index.

$$\varepsilon = \left(\frac{P_1}{P_0}\right)^{\frac{1}{\kappa}} \qquad (1)$$

The control unit 300 calculates a compression ratio in the cylinder unit 3 based on an electrical signal (signal including positional information of the piston rod 6) output from the cylinder internal pressure sensor 3d and the above Expression (1) using the piston rod position acquisition unit 310. Further, the control unit 300 calculates a position in the height direction of the piston rod 6 based on the compression ratio using the piston rod position acquisition unit 310.

Then, the control unit 300 determines whether or not the position of the piston rod 6 is lower than a position (set position) based on a predetermined compression ratio using the piston rod position acquisition unit 310 (step S5). When the position of the piston rod 6 is determined to be lower than the set position by the piston rod position acquisition unit 310, that is, when the determination in step S5 is YES, the control unit 300 causes the plunger pump control unit 330 to increase the discharge amount of the plunger pump 8c (step S6). Also, when the position of the piston rod 6 is determined to be higher than the set position by the piston rod position acquisition unit 310, that is, when the determination in step S5 is NO, the discharge amount of the plunger pump 8c is reduced by the plunger pump control unit 330 (step S7).

According to this embodiment, since the control unit 300 acquires a position of the piston rod 6, when the position of the piston rod 6 is unintentionally changed due to leakage of the hydraulic oil or the like, the control unit 300 can control the plunger pump 8c such that the piston rod 6 returns to the set position (such that the movement position of the piston rod 6 is held). Thereby, it is possible to prevent an unintended change in compression ratio and to maintain the compression ratio. The "movement position of the piston rod 6" in this embodiment denotes the position of the piston rod 6 to be moved by the hydraulic chamber R3, in other words, denotes the relative position of the piston rod 6 with respect to the crosshead pin 7a or with respect to the hydraulic chamber R3.

Also, according to this embodiment, since the control unit 300 controls the relief valve 8f based on temperature information of the hydraulic oil, the hydraulic oil can be discharged from the hydraulic chamber R3 when the hydraulic oil reaches a high temperature. Thereby, it is possible to prevent the hydraulic oil from reaching a high temperature in the hydraulic chamber R3, and to prevent an unintended change in volume, cavitation or the like. Accordingly, it is possible to prevent an unintended change in compression ratio and to maintain the compression ratio.

(Second Embodiment)

A modification of the first embodiment will be described as a second embodiment. Note that in the second embodiment, members having the same configurations as those of the first embodiment are represented by the same reference signs, and descriptions thereof will be omitted.

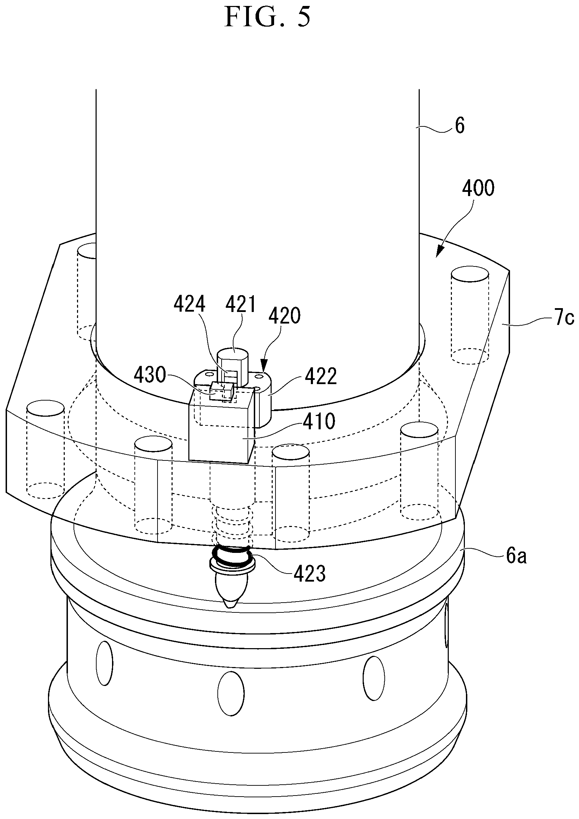

An engine system 100 of this embodiment includes a position detection unit 400 (detection device). As shown in FIG. 5, the position detection unit 400 includes a magnetic sensor 410 (sensor unit), a rod unit 420, and a communication unit 430. The magnetic sensor 410 is a sensor that is fixed to the lid member 7c and generates an electrical signal (signal including positional information of the piston rod 6) due to a change in magnetic field according to movement of a rod 421 to be described later.

The rod unit 420 includes the rod 421, a holding part 422, a pressing spring 423, and a magnetic member 424. The rod 421 is a rod-shaped member including, in the vicinity of an end portion thereof, a flange that holds the pressing spring 423. The rod 421 is inserted together with the holding part 422 into a through-hole provided in the lid member 7c, is disposed in an extending direction of the piston rod 6, and is pressed by the pressing spring 423 against the large diameter portion 6a being at the end portion of the piston rod 6 to be fixed thereto. The holding part 422 is a cylindrical member that is fixed to the lid member 7c and into which the rod 421 is inserted. The rod 421 is configured to be able to reciprocate inside the holding part 422. The pressing spring 423 is provided between the flange of the rod 421 and the large diameter portion 6a of the piston rod 6 and pushes the rod 421 toward the large diameter portion 6a of the piston rod 6. The magnetic member 424 is a member in which a plurality of magnets are arranged at regular intervals, and is provided on a circumferential surface of the rod 421 in an extending direction of the rod 421.

The communication unit 430 is a telemeter that transmits an electrical signal detected by the magnetic sensor 410 to the control unit 300 through wireless communication.

In the position detection unit 400, when the rod 421 is moved in association with the movement of the piston rod 6, the magnetic member 424 is moved, whereby the magnetic field detected by the magnetic sensor 410 changes. The magnetic sensor 410 outputs such a change in magnetic field as an electrical signal. The magnetic sensor 410 can detect movement of the rod 421 (detection target) fixed to the piston rod 6 in a non-contact manner.

In this embodiment, the piston rod position acquisition unit 310 calculates a position of the piston rod 6 based on an input from the position detection unit 400.

According to this embodiment, since the control unit 300 acquires a position of the piston rod 6 based on an input from the position detection unit 400, when the position of the piston rod 6 is unintentionally changed due to leakage of hydraulic oil or the like, the control unit 300 can control the plunger pump 8c such that the piston rod 6 returns to a set position. Thereby, it is possible to prevent an unintended change in compression ratio and to maintain the compression ratio. Further, according to this embodiment, it is possible to directly detect a position in the height direction of the piston rod 6 and thus to acquire a more accurate position in the height direction of the piston rod 6.

(Third Embodiment)

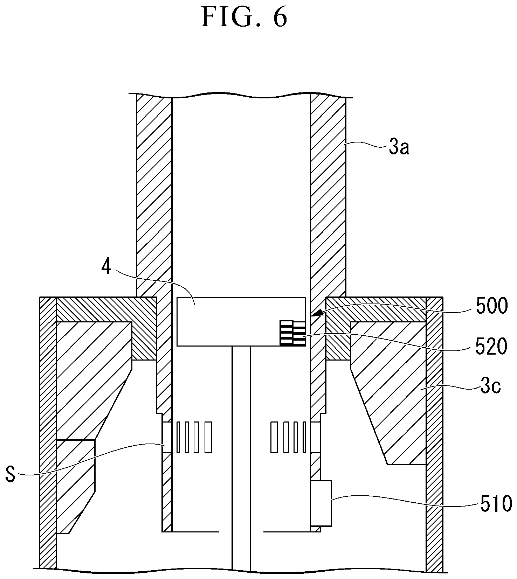

An engine system 100 of this embodiment includes a position detection unit 500 (detection device) instead of the position detection unit 400 of the second embodiment described above. As shown in FIG. 6, the position detection unit 500 includes a sensor unit 510 and detection targets 520. The sensor unit 510 is embedded in and fixed to a lower end portion of the inner circumferential surface of the cylinder liner 3a, which is a position farther than the scavenging ports S with respect to the combustion chamber R1. The sensor unit 510 is a sensor that generates an electrical signal (signal including positional information of a piston rod 6) due to a change in distance from surfaces of the two detection targets 520 in association with movement of the detection targets 520.

Each of the detection targets 520 is provided on a lower end side of the sliding surface of the piston 4 and is configured of a plurality of recesses and protrusions formed at regular intervals in the sliding direction (up-down direction) of the piston 4. Further, the detection targets 520 are provided below piston rings (not shown) provided on the piston 4 (to be closer to the piston rod 6 than the piston rings). Thereby, it is possible to reduce an influence of lubricating oil, which is on the sliding surface of the piston 4, on the detection targets 520.

In the position detection unit 500, when the piston 4 is moved in association with the movement of the piston rod 6, the recesses and protrusions of the detection target 520 move relative to the sensor unit 510, and thereby the distance between the sensor unit 510 and the detection target 520 to be detected by the sensor unit 510 changes. The sensor unit 510 detects such a change in recesses and protrusions, that is, a change in relative distance to the surface of the detection target 520 in a non-contact manner and outputs the detected change to the control unit 300 as an electrical signal.

In this embodiment, the piston rod position acquisition unit 310 calculates a position of the piston rod 6 based on an input from the position detection unit 500.

According to this embodiment, since the control unit 300 acquires a position of the piston rod 6 based on an input from the position detection unit 500, when the position of the piston rod 6 is unintentionally changed due to leakage of hydraulic oil or the like, the control unit 300 can control the plunger pump 8c such that the piston rod 6 returns to a set position. Accordingly, it is possible to prevent an unintended change in compression ratio and to maintain the compression ratio.

Further, since the sensor unit 510 is embedded in the cylinder liner 3a fixed to the frame 2, the sensor unit 510 and the control unit 300 can be easily connected by wire. Accordingly, it is not necessary for the sensor unit 510 to be provided with a communication unit or the like and thus to be easily installed.

The engine system 100 of the above embodiments includes: a variable compression device A including a hydraulic chamber R3 that causes a piston rod 6 connected to a piston 4 to be moved in a direction in which a compression ratio is increased by a pressurized working fluid being supplied thereto; a hydraulic portion 8 that pressurizes the working fluid and supplies the pressurized working fluid to the hydraulic chamber R3; a detection device (3d, 400, 500) that outputs a signal including positional information of the piston rod 6; and a control device 300 configured to control the hydraulic portion 8 so as to hold a movement position of the piston rod 6 based on the positional information.

The detection device (3d) may be provided in a cylinder liner 3a in which the piston 4 is accommodated and may be configured to output a signal including positional information of the piston 4.

The detection device (400, 500) may include a sensor unit (410, 510) that detects movement of a detection target fixed to the piston rod 6 in a non-contact manner.

The hydraulic portion 8 may include a relief valve 8f provided in a relief flow path R5 that provides communication between the hydraulic chamber R3 and the outside thereof, and the control device 300 may be configured to control the hydraulic portion 8 and the relief valve 8f such that while the working fluid is supplied to the hydraulic chamber R3, the working fluid is discharged from the hydraulic chamber R3.

In a method of controlling a variable compression device A including a hydraulic chamber R3 that causes a piston rod 6 connected to a piston 4 to be moved in a direction in which a compression ratio is increased by a pressurized working fluid being supplied thereto, a hydraulic portion 8, which is configured to pressurize the working fluid and supply the pressurized working fluid to the hydraulic chamber R3 or to discharge the working fluid from the hydraulic chamber R3, is controlled so as to hold a movement position of the piston rod 6 based on positional information of the piston rod 6.

Hereinbefore, while preferred embodiments of the present disclosure have been described with reference to the drawings, the present disclosure is not limited to the embodiments. Shapes, combinations and the like of the components described in the above embodiments are examples, and various modifications can be made based on design requests and the like within the scope of the present disclosure.

In the above embodiments, the control unit 300 determines only whether or not the position in the height direction of the piston rod 6 is lower than a set position, but the present disclosure is not limited thereto. For example, the control unit 300 may also determine whether the position in the height direction of the piston rod 6 is higher than a set position, and the relief valve control unit 340 may open the relief valve 8f to discharge the hydraulic oil based on the positional information in the height direction of the piston rod 6.

Also, the position detection device may be configured to include a laser distance sensor that detects movement of the piston rod 6 or the piston 4. In this case, the piston rod 6 or the piston 4 is provided with a marker (detection target) including recesses and protrusions.

Description of Reference Signs

1 Engine
2 Frame
3 Cylinder unit
3a Cylinder liner
3b Cylinder head
3c Cylinder jacket
3d Cylinder internal pressure sensor (detection device)
4 Piston
5 Exhaust valve unit
5a Exhaust valve
5b Exhaust valve cage
5c Exhaust valve-driving unit
6 Direct piston rod
6 Piston rod
7 Crosshead
7a Crosshead pin
7b Guide shoe
7c Lid member
8 Hydraulic portion (pressure-increasing mechanism)
8a Supply pump
8b Swing pipe
8c Plunger pump
8c1 Plunger
8c2 Cylinder
8c3 Plunger-driving unit
8d First check valve
8e Second check valve
8f Relief valve (discharge valve)
8f1 Main body
8f2 Relief valve-driving unit
9 Connecting rod
10 Crank angle sensor
11 Crankshaft
12 Scavenging reservoir
13 Exhaust reservoir
14 Air cooler
100 Engine system

200 Turbocharger
300 Control unit
310 Piston rod position acquisition unit
400 Position detection unit
410 Magnetic sensor (sensor unit)
411 Uneven part
412 Uneven part
420 Rod unit
421 Rod (detection target)
422 Holding part
423 Pressing spring
424 Magnetic member
430 Communication unit
500 Position detection unit
510 Sensor unit
520 Detection target
A Variable compression device
H Exhaust port
O Outlet hole
R1 Combustion chamber
R2 Scavenging chamber
R3 Hydraulic chamber (fluid chamber)
R4 Supply flow path
R5 Relief flow path (flow path)
R6 Auxiliary flow path
S Scavenging port

**Claims**

1. An engine system comprising:

   a variable compression device including a hydraulic chamber that causes a piston rod connected to a piston to be moved in a direction in which a compression ratio is increased by a pressurized working fluid being supplied thereto;
   a pressure-increasing mechanism that pressurizes the working fluid and supplies the pressurized working fluid to the hydraulic chamber;
   a detection device that outputs a signal including positional information of the piston rod; and
   a control device configured to control the pressure-increasing mechanism so as to hold a movement position of the piston rod based on the positional information.

2. The engine system according to claim 1, wherein the detection device is provided in a cylinder liner in which the piston is accommodated and is configured to output a signal including positional information of the piston.

3. The engine system according to claim 1, wherein the detection device includes a sensor unit that detects movement of a detection target fixed to the piston rod in a non-contact manner.

**4.** The engine system according to any one of claims 1 to 3, wherein
the pressure-increasing mechanism includes a discharge valve provided in a flow path that provides communication between the hydraulic chamber and the outside thereof, and
the control device is configured to control the pressure-increasing mechanism and the discharge valve such that while the working fluid is supplied to the hydraulic chamber, the working fluid is discharged from the hydraulic chamber.

**5.** A method of controlling a variable compression device including a hydraulic chamber that causes a piston rod connected to a piston to be moved in a direction in which a compression ratio is increased by a pressurized working fluid being supplied thereto, the method comprising:
controlling a pressure-increasing mechanism, which is configured to pressurize the working fluid and supply the pressurized working fluid to the hydraulic chamber or to discharge the working fluid from the hydraulic chamber, so as to hold a movement position of the piston rod based on positional information of the piston rod.

# FIG. 1

FIG. 2

# FIG. 3

CYLINDER INTERNAL
PRESSURE SENSOR

TEMPERATURE
SENSOR

300

310

320

PISTON ROD
POSITION
ACQUISITION UNIT

TEMPERATURE
ACQUISITION UNIT

PLUNGER PUMP
CONTROL UNIT

RELIEF VALVE
CONTROL UNIT

340

330

PLUNGER PUMP

RELIEF VALVE

## FIG. 4

```
                    ┌──────────────┐
                    │    START     │
                    └──────┬───────┘
                           │
                           ▼
              ┌────────────────────────┐
              │  ACQUIRE TEMPERATURE   │──── S1
              │    OF HYDRAULIC OIL    │
              └───────────┬────────────┘
                          │
                          ▼                      S2
                    ╱─────────────╲
                  ╱   IS TEMPERATURE  ╲
                ╱  OF HYDRAULIC OIL EQUAL TO ╲  NO
                ╲  OR HIGHER THAN THRESHOLD ╱─────┐
                  ╲       VALUE?      ╱           │
                    ╲─────────────╱               │
                          │ YES                   │
                          ▼                       │
              ┌────────────────────────┐          │
              │   INCREASE DISCHARGE   │── S3      │
              │  AMOUNT OF PLUNGER PUMP│          │
              │  AND OPEN RELIEF VALVE │          │
              └───────────┬────────────┘          │
                          │◄─────────────────────┘
                          ▼
              ┌────────────────────────┐
              │   ACQUIRE POSITION     │── S4
              │     OF PISTON ROD      │
              └───────────┬────────────┘
                          │
                          ▼                 S5
                    ╱─────────────╲
                  ╱  LOWER THAN SET ╲   NO
                  ╲    POSITION?    ╱────────────┐
                    ╲─────────────╱              │
                          │ YES   S6             │ S7
                          ▼                      ▼
          ┌────────────────────────┐  ┌────────────────────────┐
          │   INCREASE DISCHARGE   │  │   DECREASE DISCHARGE   │
          │  AMOUNT OF PLUNGER PUMP│  │  AMOUNT OF PLUNGER PUMP│
          └───────────┬────────────┘  └───────────┬────────────┘
                      │                            │
                      │◄───────────────────────────┘
                      ▼
                ┌──────────────┐
                │     END      │
                └──────────────┘
```

# FIG. 5

# FIG. 6

## INTERNATIONAL SEARCH REPORT

| International application No. |
| --- |
| PCT/JP2018/044210 |

### A. CLASSIFICATION OF SUBJECT MATTER

Int.Cl.  F02D15/02(2006.01)i, F01B31/14(2006.01)i, F02B75/04(2006.01)i, F02B75/32(2006.01)i, F16C7/06(2006.01)i

According to International Patent Classification (IPC) or to both national classification and IPC

### B. FIELDS SEARCHED

Minimum documentation searched (classification system followed by classification symbols)
Int.Cl.  F02D13/00-28/00, F02B61/00-79/00, F01B1/00-31/36, F16C3/00-9/06, F15B11/00-11/22, F15B21/14

Documentation searched other than minimum documentation to the extent that such documents are included in the fields searched
Published examined utility model applications of Japan  1922-1996
Published unexamined utility model applications of Japan  1971-2019
Registered utility model specifications of Japan  1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2015/108182 A1 (IHI CORP.) 23 July 2015, paragraphs [0017]-[0047], [0061]-[0095], fig. 1-3B, 5 & US 2016/0319739 A1, paragraphs [0028]-[0058], [0072]-[0106], fig. 1-3B, 5 & EP 3098417 A1 & KR 10-2016-0090393 A & CN 106414951 A | 1, 4-5<br>2-3 |
| Y | JP 2000-337305 A (CATERPILLAR INC.) 05 December 2000, paragraph [0008], fig. 1 & US 6257118 B1, page 1, right column, lines 18-23, fig. 1 & DE 10024009 A1 | 2 |
| Y | JP 2003-130008 A (SMC CORPORATION) 08 May 2003, paragraph [0019], fig. 2 & US 2003/0079602 A1, paragraph [0032], fig. 1 & DE 10248797 A1 & FR 2831617 A1 | 3 |

☒  Further documents are listed in the continuation of Box C.      ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 February 2019 (08.02.2019) | 26 February 2019 (26.02.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

| International application No. |
|---|
| PCT/JP2018/044210 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-21433 A (MITSUBISHI MOTORS CORPORATION) 02 February 2015, paragraph [0035], fig. 1 (Family: none) | 1-5 |

Form PCT/ISA/210 (continuation of second sheet) (January 2015)

**EP 3 719 286 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017230697 A

- JP 2014020375 A